# FASCICULE DE BREVET EUROPEEN

(11) **EP 2 537 198 B1**
(45) Date de publication et mention de la délivrance du brevet: **17.02.2016**
(21) Numéro de dépôt: 11712602.9
(22) Date de dépôt: 17.02.2011
(51) Int. Cl.: H01M 4/04, H01M 10/0562, H01M 10/0525, H01M 4/139, H01M 10/058

(54) **PROCEDE DE PREPARATION D'UNE BATTERIE MONOLITHIQUE PAR FRITTAGE SOUS COURANT PULSE**
VERFAHREN ZUR HERSTELLUNG EINER FESTKÖRPERBATTERIE MITTELS SINTERN UNTER PULSIERENDEM STROM
METHOD FOR PREPARING A SOLID-STATE BATTERY BY SINTERING UNDER PULSATING CURRENT

(30) Priorité: 18.02.2010 FR 1051149
(43) Date de publication de la demande: 26.12.2012
(73) Titulaire: Centre National de la Recherche Scientifique, 75016 Paris (FR)
(72) Inventeur: DOLLE, Michael, F-31400 Toulouse (FR); ROZIER, Patrick, F-31400 Toulouse (FR); DELAIZIR, Gaelle, F-31000 Toulouse (FR); TARASCON, Jean-Marie, F-91540 Mennecy (FR); VIALLET, Virginie, F-80440 Boves (FR); MORCRETTE, Mathieu, F-80000 Amiens (FR); SEZNEC, Vincent, F-80000 Amiens (FR); BOUCHET, Renaud, F-13004 Marseille (FR); ABOULAICH, Abdelmaula, F-13004 Marseille (FR); TORTET, Laurence, F-13011 Marseille (FR)
(74) Mandataire: Goulard, Sophie
(86) Numéro de dépôt international: PCT/FR2011/050344
(87) Numéro de publication internationale: WO 2011/101603

(56) Documents cités:
- EP-A1- 2 086 038
- FR-A1- 2 540 675
- XU X ET AL: "Dense nanostructured solid electrolyte with high Li-ion conductivity by spark plasma sintering technique", MATERIALS RESEARCH BULLETIN, ELSEVIER, KIDLINGTON, GB LNKD- DOI:10.1016/J.MATERRESBULL.2007.08.007, vol. 43, no. 8-9, 4 août 2008 (2008-08-04) , pages 2334-2341, XP022717580, ISSN: 0025-5408 [extrait le 2008-06-12] cité dans la demande
- NAGATA K ET AL: "All solid battery with phosphate compounds made through sintering process", JOURNAL OF POWER SOURCES, ELSEVIER SA, CH LNKD- DOI:10.1016/J.JPOWSOUR.2007.06.227, vol. 174, no. 2, 6 décembre 2007 (2007-12-06), pages 832-837, XP025917655, ISSN: 0378-7753 [extrait le 2007-12-06] cité dans la demande

## Description

La présente invention est relative à un procédé de préparation d'une batterie Li-ion « tout solide » à électrodes céramiques composites, par frittage sous courant pulsé, ainsi qu'à la batterie « tout solide » obtenue par un tel procédé.

Cette invention trouve son application pour la fabrication de générateurs électrochimiques "tout solide" volumiques (par opposition aux microbatteries).

Les microbatteries sont des batteries « tout solide » ultrafines dont chaque élément est sous forme de couche mince solide (matériaux céramiques stratifiés). Elles sont généralement constituées d'au moins trois couches, à savoir une électrode négative (anode), une électrode positive (cathode) et un électrolyte séparant l'électrode négative de l'électrode positive et assurant la conductivité ionique. Généralement, le lithium métallique est choisi comme matériau d'électrode négative. Les matériaux utilisés à l'électrode positive sont les mêmes que dans les batteries lithium-ion classiques. L'électrolyte solide est généralement un matériau vitreux à base d'oxydes, parfois un oxysulfure ou un oxynitrure pour une meilleure conductivité ionique.

Les batteries lithium-ion (Li-ion) occupent aujourd'hui une place prédominante sur le marché de l'électronique portable. Les batteries Li-ion présentent un certain nombre d'avantages, notamment :
- elles n'ont aucun effet mémoire contrairement aux accumulateurs à base de nickel ;
- elles ont une faible autodécharge ;
- elles ne nécessitent pas de maintenance ;
- elles possèdent une haute densité d'énergie massique. Ces batteries sont donc très utilisées dans le domaine des systèmes embarqués.

Les batteries Li-ion «tout-solide», c'est-à-dire dans lesquelles les deux électrodes et l'électrolyte sont constitués de matériaux solides, présentent un intérêt important de par leurs propriétés potentiellement supérieures à celles des batteries conventionnelles à base d'électrolytes liquide ou sous forme de gel. Elles apportent notamment une solution fondamentale aux problèmes sécuritaires et environnementaux des batteries Li-ion classiques. Les batteries rechargeables sans électrolyte liquide présentent des avantages considérables incluant par exemple la stabilité thermique, l'absence de fuite et de pollution, une grande résistance aux chocs et aux vibrations, une grande fenêtre de stabilité électrochimique et un impact environnemental dans le retraitement des cellules.

Les différentes couches constituant les microgénérateurs sont principalement préparées par des méthodes de dépôt physique en phase vapeur, telles que la pulvérisation cathodique et l'évaporation thermique. Les différentes couches sont déposées successivement permettant ainsi d'assurer un collage entre les matériaux et de créer des interfaces bien définies. Le développement de batteries "tout solide" volumique consiste fréquemment en un empilement électrode composite/électrolyte/alliage métallique Li-M, dans lequel la cohésion entre les couches est le plus souvent assurée par simple compaction à froid. Kitaura H. et al. (Journal of Power Sources, 2009, 189, 145-148) décrivent par exemple la préparation d'une batterie « tout-solide » de type Li-In/Li₄Ti₅O₁₂ dans laquelle l'électrolyte est préparé par cristallisation de la céramique, puis l'électrode et l'électrolyte sont assemblés par pressage à froid. Sakuda A. et al. (Journal of Power Sources, 2009, 189, 527-530) décrivent par ailleurs la préparation d'une batterie secondaire au lithium comprenant une électrode de LiCoO₂ à revêtement d'oxyde (Li₂SiO₃ et SiO₂) et un électrolyte céramique (Li₂S-P₂S₅). Selon le procédé décrit dans cet article, la couche céramique d'électrolyte est préparée indépendamment par traitement thermique (210°C pendant 4 heures). L'électrode positive est préparée à partir d'un mélange de poudre de LiCoO₂ et d'électrolyte céramique broyé. L'électrode négative est une feuille d'indium. L'assemblage de la batterie nécessite cependant, dans ce deuxième cas, plusieurs étapes et des conditions contraignantes puisqu'il est réalisé par pressage d'une couche d'électrode positive et de l'électrolyte céramique à froid puis par application de la feuille d'indium, sous atmosphère d'argon en boite à gants. De plus cette technique d'assemblage par compaction à froid ne permet pas d'assurer des interfaces de bonnes qualités entre les couches, ce qui entraîne d'importantes limitations cinétiques imposant l'utilisation d'électrodes fines contenant, de ce fait, peu de matières actives (moins de 7 mg pour une surface de 0,79 cm² soit moins de 9 mg/cm²).

Il a également déjà été proposé de préparer des couches minces (électrodes et/ou électrolytes solides) par frittage sous courant pulsé. C'est ainsi que Xu X. et al. (Material Research Bulletin, 2008, 43, 2334-2341) décrivent la préparation d'un électrolyte solide à structure de type NASICON (structure du composé : Na₃Zr₂Si₂PO₁₂) par frittage sous courant pulsé à partir d'une nanopoudre de Li_{1,4}Al_{0,4}Ti_{1,6}(PO₄)₃ (LATP).

Nagata K. et al. (Journal of Power Sources, 2007, 174, 832-837) décrivent la préparation de batteries céramiques "tout solide" par frittage. Il est indiqué dans cet article que la préparation de batteries "tout solide" comportant un électrolyte solide de type oxyde cristallin est difficile à mettre en oeuvre dans la mesure où le traitement thermique induit une réaction à l'état solide entre la couche d'électrolyte et les matériaux actifs d'électrodes en contact avec celle-ci, ce qui conduit à la désactivation électrochimique de l'interface électrolyte/électrode. Les auteurs utilisent un phosphate comme électrolyte solide tel que du Li_{1,3}Al_{0,3}Ti_{1,7}(PO₄)₃ (LATP) et un phosphate comme matériau actif d'électrode tel que LiCoPO₄ et Li₃Fe₂(PO₄)₃, il est possible de procéder à un co-frittage sans réaction chimique, l'interface restant alors active. Dans ce cas, le frittage est réalisé à 800°C pendant 5 heures sous air. Le matériau d'électrode mis en oeuvre selon le procédé décrit dans cet article ne contient cependant pas d'agent, autre que le matériau d'électrode, générant une conductivité électronique, ce qui impose de travailler avec des épaisseurs d'électrodes très faibles (moins de 10 µm) pour l'obtention de batteries présentant des propriétés électrochimiques intéressantes mais dont les capacités sont comparables à celles des microbatteries.

Enfin, le document EP 2 086 038 décrit une batterie tout solide comprenant une électrode positive, une électrode négative et, disposé entre les deux électrodes, un électrolyte solide. Chaque électrode comprend un matériau actif (par exemple, LiMn₂O₄ pour l'électrode positive ou SiO₂ pour l'électrode négative), un agent ioniquement conducteur (électrolyte) et un agent conducteur d'électrons, tel que du carbone ou du graphite. La teneur en électrolyte n'excède pas 30% en poids par rapport au poids de l'électrode. Ce document enseigne en effet que si la teneur en électrolyte et en agent conducteur d'électrons est trop élevée, la quantité de matériau actif dans chaque électrode va s'en retrouver réduite et qu'ainsi la batterie va perdre en capacité. De plus, les épaisseurs des couches d'électrodes obtenues sont faibles, de l'ordre de 12 à 15 µm. Or, une épaisseur faible réduit également la quantité d'énergie qui peut être stockée dans une batterie. Ce document décrit également un procédé permettant d'obtenir une telle batterie. Ce procédé présente plusieurs étapes consistant à fabriquer séparément une plaque d'électrode positive, une plaque d'électrode négative et une plaque intermédiaire d'électrolyte. Pour cela, il utilise pour chaque plaque un liant à base d'acrylique (polymère) qui sera éliminé ultérieurement par brûlage. Puis, les plaques d'électrode sont pressées contre la plaque d'électrolyte et l'ensemble est fritté.

Il n'existe donc à ce jour aucune méthode permettant d'accéder, en une seule étape, à une batterie Li-ion tout solide à électrodes céramiques épaisses (par exemple de l'ordre de plus de 30 µm) présentant de très bonnes propriétés électrochimiques, associées notamment à la présence d'un agent générant une conductivité électronique dans les électrodes composites, ne pénalisant pas la densification de ces dernières et la bonne adhésion aux interfaces électrode/électrolyte au sein même de ces électrodes composites.

Les inventeurs se sont donc donné pour but de mettre à disposition un procédé permettant d'accéder à de telles batteries.

La présente invention a pour objet un procédé de préparation d'une batterie tout solide Li-ion à corps monolithique comprenant au moins une couche d'un matériau composite d'électrode négative, au moins une couche d'un matériau composite d'électrode positive, lesdites couches étant séparées l'une de l'autre par au moins une couche intermédiaire d'un électrolyte solide, ledit procédé comprenant les étapes suivantes :
- la préparation d'un mélange pulvérulent (MP1) comprenant au moins une poudre de matériau actif d'électrode négative, au moins une poudre d'un électrolyte solide, et au moins un agent générant une conductivité électronique ;
- la préparation d'un mélange pulvérulent (MP2) comprenant au moins une poudre de matériau actif d'électrode positive à base de lithium, au moins une poudre d'un électrolyte solide, et au moins un agent générant une conductivité électronique ;
et étant caractérisé en ce que :
- l'assemblage de la batterie est réalisé en une seule étape par superposition d'au moins une couche de mélange MP1 et d'au moins une couche de mélange MP2, lesdites couches étant séparées l'une de l'autre par au moins une couche intermédiaire d'un électrolyte solide sous forme pulvérulente, et frittage simultané des trois couches à une pression d'au moins 20 MPa, sous courant pulsé,
- l'électrolyte solide sous forme pulvérulente présente une granulométrie inférieure ou égale à 5 µm,
- la teneur en électrolyte solide dans chacun des mélanges MP1 et MP2 varie indépendamment de 10 à 80 % en masse,
- la teneur en agent générant une conductivité électronique dans chacun des mélanges MP1 et MP2 varie indépendamment de 2 à 25 % en masse, et
- la teneur en matériau actif d'électrode dans chacun des mélanges MP1 et MP2 varie indépendamment de 20 à 85 % en masse.

Selon ce procédé, la présence d'un électrolyte solide dans chacune des trois couches constituant la batterie permet d'assurer une homogénéité chimique, qui assure une densification simultanée des différents constituants pour une même température et une continuité du réseau de conduction des ions Li⁺ d'une électrode composite à l'autre et notamment aux interfaces électrode/électrolyte. De plus, l'empilement des trois couches comportant chacune un tel électrolyte, revient à créer un bloc à gradients de concentrations qui permet d'absorber les contraintes générées par l'association de matériaux présentant des coefficients de dilatation thermique différents.

Par rapport aux procédés de l'art antérieur, le procédé conforme à la présente invention présente les avantages suivants :
- il permet d'accéder à des batteries Li-ion « tout solide » à électrodes céramiques en une seule étape,
- il est rapide et simple à mettre en oeuvre : grâce à un frittage simultané des trois couches à une température unique, contrairement aux procédés multi-étapes intervenant à des températures différentes aboutissant souvent à des réactions chimiques parasites, qui limitent régulièrement le frittage simultané à deux couches ; de plus il ne demande aucune préparation préalable (comme la green sheet, etc.) excepté un mélange des poudres des électrodes composites.
- il ne génère aucune réaction parasite entre les constituants des différentes couches de la batterie, en particulier entre l'agent générant une conductivité électronique et les autres constituants des électrodes, tout en garantissant un bon contact aux interfaces électrodes/électrolyte,
- il permet d'accéder à des batteries autosupportées et ne nécessitant pas de substrat,
- il conduit à des batteries ayant des électrodes composites ayant de bonnes propriétés de conductivité électronique et une épaisseur bien supérieure à celles des batteries Li-ion "tout solide" dans lesquelles le matériau d'électrode ne contient pas d'agent générant une conductivité électronique,
- il permet d'accéder à des batteries dans lesquelles les couches d'électrodes sont plus épaisses que dans les batteries Li-ion tout solide jusqu'à lors disponibles techniquement, notamment à des batteries dans lesquelles chacune des couches d'électrodes peut avoir une épaisseur supérieure à 30 µm, et donc à des batteries ayant une bien plus grande capacité de stockage.
- il permet de développer des batteries présentant des stabilités thermiques supérieures aux batteries Li-ion classiques, aussi bien à l'état chargé, qu'à l'état déchargé. Ces batteries offrent la possibilité de fonctionner à plus haute température (>130°C et jusqu'à 350°C) que les batteries classiques.

La granulométrie des poudres d'électrolytes solides utilisables dans les mélanges MP1 et MP2 et dans la couche intermédiaire d'électrolyte est de préférence inférieure à la granulométrie des autres composants pulvérulents présents dans les mélanges MP1 et MP2. Selon une forme de réalisation particulièrement préférée de l'invention, la granulométrie des poudres d'électrolytes solides est inférieure ou égale à 1 µm. Dans ce cas, elle varie de préférence 0,1 à 1 µm.

La granulométrie moyenne des mélanges MP1 et MP2 est de préférence supérieure à celle des poudres d'électrolytes solides. La granulométrie moyenne des mélanges MP1 et MP2 varie indépendamment de préférence de 1 à 10 µm et encore plus préférentiellement de 1 à 3 µm.

Selon une forme de réalisation préférée de l'invention la granulométrie du mélange MP1 est sensiblement identique à la granulométrie du mélange MP2. Au sens de la présente invention, les termes « granulométrie sensiblement identique », signifient que la différence maximale de granulométrie entre les mélanges MP1 et MP2 est de ± 2 µm.

Le matériau actif d'électrode négative peut être choisi parmi les phosphates de lithium, les oxydes de titane et de lithium tels que Li₄Ti₅O₁₂, les phosphates de niobium tels que PNb₉O₂₅, le silicium et le graphite de carbone.

Parmi les phosphates de lithium utilisables à titre de matériau actif d'électrode négative, on préfère tout particulièrement Li₃V₂(PO₄)₃, LiTi₂(PO₄)₃ et leurs mélanges.

Les composants mentionnés ci-dessus convenant comme matériau actif d'électrode négative (comme Li₃V₂(PO₄)³, LiTi₂(PO₄)³, PNb₉O₂₅, Li₄Ti₅O₁₂) peuvent être enrobés d'une couche protectrice, telle que AlPO₄, Li₂SiO₃, ZrO₂, FePO₄.

Les électrolytes solides utilisables selon la présente invention sont de préférence choisis parmi les phosphates de lithium de formule générale Li₁₊ₓAlₓM₂₋ₓ(PO₄)₃ avec M = Ge, Ti, Zr, Hf et 0 < x < 1. Parmi de tels phosphates de lithium, les composés Li_{1,5}Al_{0,5}Ge_{1,5}(PO₄)₃ et Li_{1,3}Al_{0,3}Ti_{1,7}(PO₄)₃ sont particulièrement préférés.

Selon une première forme de réalisation de la présente invention, les trois couches constituant la batterie renferment le même électrolyte.

Au sens de la présente invention, l'expression le « même électrolyte » signifie que la nature chimique et la granulométrie de l'électrolyte sont identiques dans les mélanges MP1 et MP2 et dans la couche intermédiaire d'électrolyte.

Selon une deuxième forme de réalisation de la présente invention, l'électrolyte solide présent dans le mélange MP1 est différent de l'électrolyte solide présent dans le mélange MP2.

Au sens de la présente invention, l'expression « l'électrolyte est différent » englobe aussi bien une différence de nature chimique qu'une différence de nature physique telle qu'une différence de granulométrie.

Lorsque l'électrolyte solide présent dans le mélange MP1 est différent de l'électrolyte solide présent dans le mélange MP2, la couche de mélange MP1 renferme au moins un électrolyte solide E1, la couche de mélange MP2 renferme au moins un électrolyte solide E2 différent de E1 et la couche d'électrolyte séparant les couches des mélanges MP1 et MP2 est constituée d'au moins une couche d'électrolyte E1 en contact avec la couche de mélange MP1 et d'au moins une couche d'électrolyte E2 en contact avec la couche de mélange MP2.

Selon une forme de réalisation préférée, la teneur en électrolyte solide dans chacun des mélanges varie de préférence de 10 à 80 % en masse. Cette teneur peut varier entre les mélanges MP1 et MP2 et dépend de la granulométrie et des propriétés de conduction électronique et ionique du matériau actif. Selon un mode de réalisation encore plus préféré, la teneur en électrolyte solide dans chacun des mélanges MP1 et MP2 varie indépendamment de 30 à 80 % en masse, et en particulier de 35 à 80%, et de manière encore plus préférée de 35% (non inclus) à 80%.

Le matériau actif d'électrode positive est de préférence choisi parmi les phosphates de lithium et les oxydes de lithium. Parmi les phosphates de lithium utilisables à titre de matériau actif d'électrode positive, on préfère tout particulièrement LiFePO₄, LiCoPO₄, LiNiPO₄, LiMnPO₄, Li₃V₂(PO₄)₃, Li₃Fe₂(PO₄)₃, et parmi les oxydes de lithium, on préfère LiXO₂ (avec X = Co, Ni, Mn, ou une de leurs combinaisons), et leurs mélanges.

Ces différents composés convenant comme matériau actif d'électrode positive peuvent être enrobés d'une couche protectrice, telle que : AlPO₄, Li₂SiO₃, ZrO₂, FePO₄.

Selon l'invention, la teneur en matériau actif d'électrode dans chacun des mélanges MP1 et MP2 varie indépendamment de 20 à 85 % en masse.

Selon une forme de réalisation préférée de l'invention, le matériau actif d'électrode négative, le ou les électrolyte(s) solide(s) et le matériau actif d'électrode positive sont choisis parmi les phosphates de lithium.

De préférence, au cours du procédé de préparation de la batterie tout solide Li-ion, le matériau actif d'électrode positive sera différent du matériau actif de l'électrode négative.

L'agent générant une conductivité électronique peut être choisi parmi les matériaux carbonés (poudres, fibres, nanotubes, etc...), ainsi que parmi les métaux tels que Ni, Cu, Al (ces métaux sont choisis en fonction des potentiels de fonctionnement : le Cu étant par exemple adapté aux électrodes négatives, et Al étant par exemple adapté aux électrodes positives) et les nitrures métalliques tels que par exemple TiN.

Selon une forme de réalisation préférée de l'invention, l'agent générant une conductivité électronique est un matériau carboné sous forme de particules de granulométrie nanométrique.

Selon l'invention, la teneur en agent générant une conductivité électronique varie de préférence de 2 à 25 % massique. Cette teneur peut varier entre les mélanges MP1 et MP2 et dépend de la granulométrie et des propriétés de conduction électronique du matériau actif.

Le frittage est de préférence réalisé sous vide primaire ou secondaire, sous atmosphère d'argon ou d'azote.

La pression exercée sur les couches lors du frittage peut varier. Selon une forme de réalisation préférée de l'invention, le frittage est réalisé à une pression de 100 MPa.

La température maximale de frittage peut varier de 500 à 1000°C.

La durée du frittage varie en fonction de la température. Cette durée est généralement comprise entre 1 et 60 minutes.

Selon une forme de réalisation particulièrement préférée de l'invention, le frittage est réalisé sous vide secondaire, à une pression de 100 MPa, à une température maximale comprise entre 600 et 700°C, maintenue pendant une durée de 2 à 4 minutes. La durée totale du traitement thermique est, dans ce cas, inférieure à 15 minutes.

La température de frittage peut être atteinte par paliers de températures progressifs, en appliquant des courants pulsés sur plusieurs périodes.

L'intensité du courant pulsé peut varier de 10 à 8000 A. La durée de chaque impulsion de courant est de l'ordre de quelques millisecondes. Cette durée varie de préférence de 1 à 5 ms.

Selon un mode de perfectionnement du procédé selon la présente invention, lors de l'étape d'assemblage de la batterie, au moins un collecteur de courant est positionné sur la face externe de la couche de mélange MP1 et/ou sur la face externe de la couche de mélange MP2, de sorte à être fritté simultanément avec la couche de mélange MP1, la couche d'électrolyte et la couche de mélange MP2. On entend par « face externe » de la couche de mélange MP1 et/ou MP2, la face de la couche de mélange MP1 et/ou MP2 qui n'est pas en contact avec la couche intermédiaire d'électrolyte solide.

Le collecteur de courant se présente généralement sous forme de poudre, de grille ou de feuille(s).

Le matériau du collecteur de courant est choisi parmi : le cuivre, le nickel, l'inox, l'aluminium, le carbone, le titane, l'argent, l'or, le platine ou un de leurs mélanges.

Ils sont choisis en fonction du potentiel de fonctionnement du matériau actif de l'électrode positive et négative. Ils ne doivent pas s'oxyder ou se réduire au contact du matériau d'électrode. Le cuivre sera ainsi préféré pour les matériaux à bas potentiel, tandis que l'aluminium sera préféré pour les matériaux à haut potentiel.

Généralement, un premier collecteur de courant est positionné sur la face externe de la couche de mélange MP1 et un deuxième collecteur de courant est positionné sur la face externe de la couche de mélange MP2, de sorte à réaliser un frittage simultané d'au moins cinq couches : premier collecteur/couche MP1/couche électrolyte solide/couche MP2/deuxième collecteur.

L'invention a également pour objet la batterie tout solide Li-ion obtenue en mettant en oeuvre le procédé de préparation conforme à l'invention et tel que décrit précédemment, ladite batterie comprenant un corps monolithique formé d'au moins 3 couches superposées comme suit:
- au moins une couche d'un matériau composite d'électrode négative comprenant au moins un matériau actif d'électrode négative, au moins un électrolyte solide, et au moins un agent générant une conductivité électronique ;
- au moins une couche d'un matériau composite d'électrode positive comprenant au moins un matériau actif d'électrode positive à base de lithium, au moins un électrolyte solide, et au moins un agent générant une conductivité électronique ;
- au moins une couche intermédiaire d'électrolyte solide séparant lesdites couches de matériaux composites d'électrodes négative et positive l'une de l'autre;
- la teneur en électrolyte solide dans chacune des couches de matériau composite d'électrode varie indépendamment de 10 à 80 % en masse ;
- la teneur en agent générant une conductivité électronique dans chacune des couches de matériau composite d'électrode varie indépendamment de 2 à 25 % en masse ; et
- la teneur en matériau actif d'électrode dans chacune des couches de matériau composite d'électrode varie indépendamment de 20 à 85 % en masse,
ladite batterie étant caractérisée en ce que l'épaisseur de chacune des couches d'électrode varie, indépendamment l'une de l'autre, de 30 à 1400 µm.

En particulier, la teneur en électrolyte solide dans chacune des couches de matériau composite d'électrode varie indépendamment de 30 à 80 % en masse, de préférence de 35 à 80%, et de manière encore plus préférée de 35% (non inclus) à 80%.

Selon l'invention, l'épaisseur de chacune des couches d'électrode peut varier, indépendamment l'une de l'autre, de 30 à 800 µm, de préférence de 50 à 800 µm et de manière encore plus préférée de 50 à 500 µm.

L'épaisseur de la couche intermédiaire d'électrolyte varie de préférence de 10 à 500 µm environ, et encore plus préférentiellement de 10 à 60 µm.

Selon une forme de perfectionnement de l'invention, ledit corps monolithique comprend également au moins un collecteur de courant superposé à la couche du matériau composite d'électrode négative et/ou à la couche du matériau composite d'électrode positive, au niveau de leur face externe.

De préférence, ladite couche de collecteur de courant est choisie parmi : le cuivre, le nickel, l'inox, l'aluminium, le carbone, le titane, l'argent, l'or, le platine ou un de leurs mélanges.

La présente invention concerne également un ensemble de batteries (multi-cells pack), caractérisé en ce qu'il comprend au moins deux batteries, telles que décrites ci-dessus, reliées par un collecteur de courant qui appartient à l'une ou l'autre desdites batteries, ledit collecteur de courant formant une barrière physique au passage des ions. Selon l'invention, l'expression « barrière physique au passage des ions» signifie que le collecteur se présente sous forme de poudre frittée ou de feuille, mais pas sous forme de grille qui ne forme pas de barrière physique aux ions.

Ainsi, le collecteur de courant relie deux batteries au niveau d'une de leurs électrodes, qu'elle soit positive ou négative. C'est pourquoi, de préférence, celui-ci est compatible à la fois avec les deux électrodes qu'il relie. En outre, le collecteur de courant peut relier deux électrodes négatives ou deux électrodes positives. Dans ce cas, on dit que les batteries sont montées tête-bêche. Le collecteur de courant peut également relier une électrode négative et une électrode positive. Dans ce cas, on dit que les batteries sont montées en série (architecture bipolaire).

De plus, il est possible, de superposer deux collecteurs de courant (un appartenant à chacune des batteries) à la jonction des deux batteries (avec formation ou non entre les 2 collecteurs d'un alliage, si ce dernier reste compatible aux potentiels des électrodes concernées).

La présente invention sera mieux comprise et d'autres buts, détails, caractéristiques et avantages de celle-ci apparaîtront plus clairement à la lecture de la description suivante d'exemples de réalisation.

### EXEMPLES

Les différents matériaux inorganiques non commerciaux utilisés dans les exemples ont été préalablement synthétisés selon les méthodes connues de la littérature :
- Phosphate de fer lithié (LiFePO4) : Delacourt, C. et al., Solid State Ionics, 2004, 173, 113-118.
- Phosphate d'aluminium et de germanium lithié (Li1,5Al0,5Ge1,5(PO4)3) : M. Cretin, P. Fabry, J Eur. Ceram. Soc., 1999, 19, 2931-2940.
- Phosphate de vanadium lithié (Li3V2(PO4)3) : S. Patoux et al, J. Power Sources, 2003, 119-121, 278-284

### Exemple 1 : Préparation d'une batterie Li-ion «tout solide » selon le procédé de l'invention

Dans cet exemple on a préparé une batterie de diamètre 15 mm dans laquelle le rapport de masse électrode positive/électrode négative était de 1,2 pour des compositions d'électrodes renfermant 25 % en masse de matériau actif d'électrode, 60% en masse d'électrolyte et 15 % en masse d'agent générant une conductivité électronique.

Cette batterie était constituée :
- d'une électrode positive constituée de 0,0215 g de LiFePO₄ (LFP) ayant une granulométrie moyenne de 15-20 µm, de 0,0515 g de Li_{1,5}Al_{0,5}Ge_{1,5}(PO₄)₃ (LAG) ayant une granulométrie moyenne de 5-10 µm et de 0,0129 g de noir de carbone vendu sous la dénomination commerciale Super P® par la société Timcal ayant une granulométrie moyenne de 50-100 nm. Le mélange de ces ingrédients a été broyé manuellement dans un mortier en agate pendant 20 minutes ;
- d'une électrode négative constituée de 0,0178 g de Li₃V₂(PO₄)₃ (LVP) ayant une granulométrie moyenne de 30-40 µm, de 0,0426 g de LAG ayant une granulométrie moyenne de 5-10 µm et de 0,0106 g de carbone Super P® de la société Timcal ayant une granulométrie moyenne de 50-100 nm. Le mélange de ces ingrédients a été broyé manuellement dans un mortier en agate pendant 20 minutes ;
- d'un électrolyte solide constitué de 0,2412 g de Li_{1,5}Al_{0,5}Ge_{1,5}(PO₄)₃ de granulométrie allant de 0,4 à 5 µm.

Les différents mélanges constituant l'électrode positive, l'électrolyte et l'électrode négative ont ensuite été placés successivement dans une matrice en carbone graphite (grade 2333, société Carbone Lorraine), de 15 mm de diamètre, et dont l'intérieur a été protégé par un film de graphite flexible vendu sous la dénomination commerciale Papyex® par la société Carbone Lorraine. La matrice a ensuite été fermée par des pistons symétriques constitués également de carbone graphite de grade 2333 puis introduite dans la chambre d'une machine SPS vendue sous la dénomination commerciale Dr Sinter 2080® par la société Sumitomo Inc., qui a alors été mise sous vide secondaire. La mise en forme de la batterie a alors eu lieu en appliquant deux rampes, à savoir une rampe en pression et une rampe en température. Une pression de 100 MPa a été atteinte en trois minutes et maintenue pendant le reste de la synthèse (7 minutes). Une température de 650°C a été atteinte en 2 étapes : une rampe de 100°C.min⁻¹ pendant 5 minutes, puis une rampe de 50°C.min⁻¹ pendant 3 minutes. Cette température a alors été maintenue pendant 2 minutes. Ces rampes de température ont été obtenues par application de courants directs pulsés définis sur 14 périodes de 3,2 ms, dont 12 périodes de pulses et 2 périodes de non pulses. La matrice a alors été refroidie au sein de la chambre du SPS. La batterie ainsi obtenue a ensuite été polie sur papier abrasif pour enlever le film de Papyex® résiduel.

On a ainsi obtenu une batterie Li-ion monolithique de diamètre 15 mm et d'épaisseur totale de 870 µm, ladite batterie étant constituée d'une couche d'un matériau composite d'électrode positive de 220 µm d'épaisseur, d'une couche intermédiaire d'électrolyte solide de 430 µm d'épaisseur et d'une couche d'un matériau d'électrode négative de 220 µm d'épaisseur.

Dans cette batterie, le rapport de masse électrode positive/électrode négative est de 1,2 pour des compositions d'électrodes renfermant 25 % en masse de matériau actif d'électrode, 60 % en masse d'électrolyte Li_{1,5}Al_{0,5}Ge_{1,5}(PO₄)₃ et 15 % en masse de carbone Super P®.

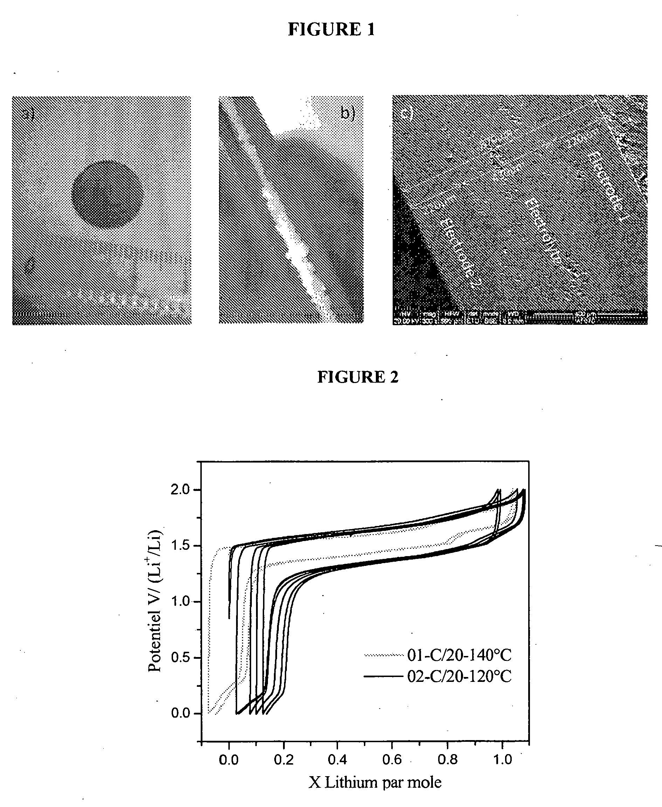

La figure 1 annexée représente a) la batterie tout solide ainsi obtenue, b) une image en coupe de la batterie laissant apparaître les trois couches superposées, et c) un cliché de microscopie électronique à balayage (MEB) en électrons rétrodiffusés de cette même section.

### Exemple 2 : Préparation d'une batterie Li-ion « tout solide » selon le procédé de l'invention

Dans cet exemple on a préparé une batterie de diamètre 8 mm dans laquelle le rapport de masse électrode positive/électrode négative était de 0,72 pour des compositions d'électrodes renfermant 25 % en masse de matériau actif d'électrode, 60 % en masse d'électrolyte et 15 % en masse d'agent générant une conductivité électronique.

Cette batterie était constituée :
- d'une électrode positive constituée de 0,0115 g de LFP ayant une granulométrie moyenne de 15-20 µm, de 0,0276 g de LAG ayant une granulométrie moyenne de 5-10 µm et de 0,0069 g de noir de carbone vendu sous la dénomination commerciale Super P® par la société Timcal ayant une granulométrie moyenne de 50-100 nm. Le mélange de ces ingrédients a été broyé manuellement dans un mortier en agate pendant 20 minutes ;
- d'une électrode négative constituée de 0,016 g de LVP ayant une granulométrie moyenne de 30-40 µm, de 0,0384 g de LAG ayant une granulométrie moyenne de 5-10 µm et de 0,0096 g de carbone Super P® de la société Timcal ayant une granulométrie moyenne de 50-100 nm. Le mélange de ces ingrédients a été broyé manuellement dans un mortier en agate pendant 20 minutes ;
- d'un électrolyte solide constitué de 0,078 g de LAG ayant une granulométrie moyenne de 5-10 µm.

Les différents mélanges constituant l'électrode positive, l'électrolyte et l'électrode négative ont ensuite été placés successivement dans une matrice en carbone graphite (grade 2333, société Carbone Lorraine), de 8 mm de diamètre, et dont l'intérieur a été protégé par un film de Papyex®. La matrice a ensuite été fermée par des pistons symétriques constitués également de carbone graphite de grade 2333 puis introduite dans la chambre de la machine SPS utilisée ci-dessus à l'exemple 1, qui a alors été mise sous vide secondaire. La mise en forme de la batterie a alors été effectuée dans les conditions décrites ci-dessus à l'exemple 1.

On a obtenu une batterie « tout solide » de diamètre 8 mm et d'épaisseur totale de 1600 µm, ladite batterie étant constituée d'une couche d'un matériau composite d'électrode positive de 400 µm d'épaisseur, d'une couche intermédiaire d'électrolyte solide de 500 µm d'épaisseur et d'une couche d'un matériau d'électrode négative de 714 µm d'épaisseur.

- Cette batterie a ensuite été soumise à des tests électrochimiques. Afin de réaliser ces tests électrochimiques, une couche de quelques centaines de manomètres d'or a été déposée sur les deux faces de la batterie par pulvérisation cathodique. La batterie a ensuite été placée dans une cellule de laboratoire type Swagelok® et assemblée sous atmosphère inerte en boîte à gants. La batterie a ensuite été testée en mode galvanostatique en utilisant un cycleur de type Solartron 1470®. Pour les tests en température, la cellule a été placée dans une enceinte climatique, qui fonctionne dans une gamme de température comprise entre 25°C et 150°C. Les régimes sont exprimés en C/n, ce qui correspond à une charge ou décharge totale de la batterie en n heures.

La figure 2 annexée représente les courbes de cyclage obtenues à 140°C (2 cycles, courbes en gris clair) et 120°C (6 cycles, courbes en noir) au même régime de cyclage de C/20 soit une décharge et une charge complète en 20 heures. Sur cette figure, le potentiel V (Li⁺/Li) est fonction de la quantité de lithium inséré par mole de matière active à la cathode.

Ces courbes montrent i/ que l'on récupère toute la capacité disponible et ii/ la bonne cyclabilité de cette batterie.

### Exemple 3 : Préparation d'une batterie Li-ion « tout solide » selon le procédé de l'invention

Dans cet exemple on a préparé une batterie de diamètre 8 mm dans laquelle le rapport de masse électrode positive/électrode négative était de 1,00 pour des compositions d'électrodes renfermant 25 % en masse de matériau actif d'électrode, 60% en masse d'électrolyte et 15 % en masse d'agent générant une conductivité électronique.

Cette batterie était constituée :
- d'une électrode positive et d'une électrode négative, toutes deux constituées de 0,0081 g de LVP ayant une granulométrie moyenne de 30-40 µm, de 0,0195 g de LAG ayant une granulométrie moyenne de 5-10 µm et de 0,0049 g de noir de carbone vendu sous la dénomination commerciale Super P® par la société Timcal ayant une granulométrie moyenne de 50-100 nm. Le mélange de ces ingrédients a été broyé manuellement dans un mortier en agate pendant 20 minutes ;
- d'un électrolyte solide constitué de 0,078 g de LAG ayant une granulométrie moyenne de 5-10 µm.

Les différents mélanges constituant l'électrode positive, l'électrolyte et l'électrode négative ont ensuite été placés successivement dans une matrice en carbone graphite (grade 2333, société Carbone Lorraine), de 8 mm de diamètre, et dont l'intérieur a été protégé par un film de graphite flexible vendu sous la dénomination commerciale Papyex® par la société Carbone Lorraine. La matrice a ensuite été fermée par des pistons symétriques constitués également de carbone graphite de grade 2333 puis introduite dans la chambre d'une machine SPS vendue sous la dénomination commerciale Dr Sinter 2080® par la société Sumitomo Inc., qui a alors été mise sous vide secondaire. La mise en forme de la batterie a alors eu lieu en appliquant deux rampes, à savoir une rampe en pression et une rampe en température. Une pression de 100 MPa a été atteinte en trois minutes et maintenue pendant le reste de la synthèse (7 minutes). Une température de 680°C a été atteinte en 2 étapes : une rampe de 100°C.min⁻¹ pendant 6 minutes, puis une rampe de 40°C.min⁻¹ pendant 2 minutes. Cette température a alors été maintenue pendant 2 minutes. Ces rampes de température ont été obtenues par application de courants directs pulsés définis sur 14 périodes de 3,2 ms, dont 12 périodes de pulses et 2 périodes de non pulses. La matrice a alors été refroidie au sein de la chambre du SPS. La batterie ainsi obtenue a ensuite été polie sur papier abrasif pour enlever le film de Papyex® résiduel.

On a obtenu une batterie « tout solide » de diamètre 8 mm et d'épaisseur totale de 1000 µm, ladite batterie étant constituée d'une couche d'un matériau composite d'électrode positive de 250 µm d'épaisseur, d'une couche intermédiaire d'électrolyte solide de 500 µm d'épaisseur et d'une couche d'un matériau d'électrode négative de 250 µm d'épaisseur.

Dans cette batterie, le rapport de masse électrode positive/électrode négative était de 1 pour des compositions d'électrodes renfermant 25 % en masse de matériau actif d'électrode Li₃V₂(PO₄)₃, 65 % en masse d'électrolyte Li_{1,5}Al_{0,5}Ge_{1,5}(PO₄)₃ et 15 % en masse de carbone Super P®.

Cette batterie a ensuite été soumise à des tests électrochimiques comme décrit ci-dessus à l'exemple 2.

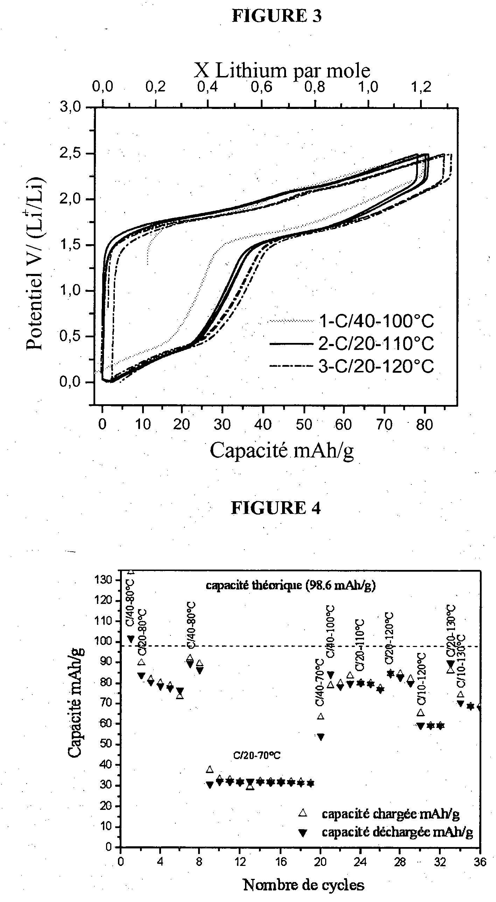

La figure 3 annexée représente les courbes de cyclage obtenues à 100°C (1 cycle à C/40 : courbe en trait gris clair), à 110°C (3 cycles à C/20 : courbe en trait noir) et enfin à 120°C (3 cycles à C/20 : courbe en trait discontinu). Sur cette figure, le potentiel V (Li⁺/Li) est fonction de la capacité (en mAh/g) et de la quantité de lithium inséré par mole de matière active.

Ces courbes montrent que la cyclabilité de cette batterie est très bonne et qu'une augmentation de température améliore les performances.

La figure 4 annexée représente la courbe d'évolution de la capacité spécifique de la batterie pour différents régimes et différentes températures. Sur cette figure la capacité de la batterie (en mAh/g) est fonction du nombre de cycles, les triangles vides correspondent à la capacité chargée (mAh/g) et les triangles pleins à la capacité déchargée (mAh/g).

### Exemple 4 : Préparation d'une batterie Li-ion « tout solide » selon le procédé de l'invention

Dans cet exemple on a préparé une batterie de diamètre 8 mm dans laquelle le rapport de masse électrode positive/électrode négative était de 0,5 pour des compositions d'électrodes renfermant 25 % en masse de matériau actif d'électrode, 60% en masse d'électrolyte et 15 % en masse d'agent générant une conductivité électronique.

Cette batterie était constituée :
- d'une électrode positive constituée de 0,0125 g de LVP ayant une granulométrie moyenne de 30-40 µm, de 0,03 g de LAG ayant une granulométrie moyenne de 5-10 µm et de 0,0075 g de noir de carbone vendu sous la dénomination commerciale Super P® par la société Timcal ayant une granulométrie moyenne de 50-100 nm. Le mélange de ces ingrédients a été broyé manuellement dans un mortier en agate pendant 20 minutes ;
- d'une électrode négative constituée de 0,025 g de LVP ayant une granulométrie moyenne de 30-40 µm, de 0,06 g de LAG ayant une granulométrie moyenne de 5-10 µm et de 0,015 g de noir de carbone vendu sous la dénomination commerciale Super P® par la société Timcal ayant une granulométrie moyenne de ' 50-100 nm. Le mélange de ces ingrédients a été broyé manuellement dans un mortier en agate pendant 20 minutes ;
- d'un électrolyte solide constitué de 0,074 g de LAG ayant une granulométrie moyenne de 5-10 µm.

Les différents mélanges constituant l'électrode positive, l'électrolyte et l'électrode négative ont ensuite été placés successivement dans une matrice en carbone graphite (grade 2333, société Carbone Lorraine), de 8 mm de diamètre, et dont l'intérieur a été protégé par un film de graphite flexible vendu sous la dénomination commerciale Papyex® par la société Carbone Lorraine. La matrice a ensuite été fermée par des pistons symétriques constitués également de carbone graphite de grade 2333 puis introduite dans la chambre d'une machine SPS vendue sous la dénomination commerciale Dr Sinter 2080® par la société Sumitomo Inc., qui a alors été mise sous vide secondaire. La mise en forme de la batterie a alors eu lieu en appliquant deux rampes, à savoir une rampe en pression et une rampe en température. Une pression de 100 MPa a été atteinte en trois minutes et maintenue pendant le reste de la synthèse (7 minutes). Une température de 680°C a été atteinte en 2 étapes : une rampe de 100°C.min⁻¹ pendant 6 minutes, puis une rampe de 40°C.min⁻¹ pendant 2 minutes. Cette température a alors été maintenue pendant 2 minutes. Ces rampes de température ont été obtenues par application de courants directs pulsés définis sur 14 périodes de 3,2 ms, dont 12 périodes de pulses et 2 périodes de non pulses. La matrice a alors été refroidie au sein de la chambre du SPS. La batterie ainsi obtenue a ensuite été polie sur papier abrasif pour enlever le film de Papyex® résiduel.

On a obtenu une batterie « tout solide » de diamètre 8 mm et d'épaisseur totale de 1630 µm, ladite batterie étant constituée d'une couche d'un matériau composite d'électrode positive de 380 µm d'épaisseur, d'une couche intermédiaire d'électrolyte solide de 500 µm d'épaisseur et d'une couche d'un matériau d'électrode négative de 750 µm d'épaisseur.

Dans cette batterie, le rapport de masse électrode positive/électrode négative est de 0,5 pour des compositions d'électrodes renfermant 25 % en masse de matériau actif d'électrode Li₃V₂(PO₄)₃, 65 % en masse d'électrolyte Li_{1,5}Al_{0,5}Ge_{1,5}(PO₄)₃ et 15 % en masse de carbone Super P®.

Cette batterie a ensuite été soumise à des tests électrochimiques comme décrit ci-dessus à l'exemple 2.

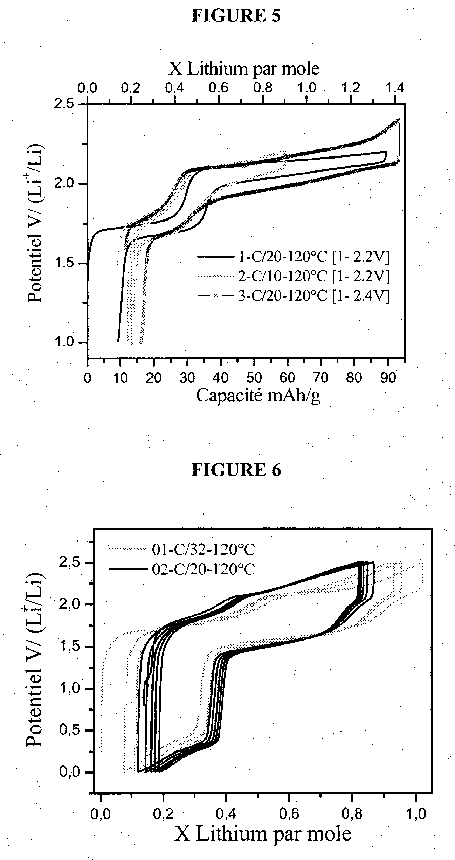

La figure 5 annexée représente les courbes électrochimiques de la batterie ainsi obtenue à différents régimes et différentes fenêtres de potentiel (1-2,2V et 1-2,4V. Sur cette figure, le potentiel V (Li⁺/Li) est fonction de la capacité (en mAh/g) et de la quantité de lithium inséré par mole de matière active à la cathode : la courbe en trait noir correspond au cyclage effectué à 120°C (1 cycle à C/20 entre 1 et 2,2V), les courbe en trait gris clair correspondent aux cyclages effectués à 120°C (3 cycles à C/10 entre 1 et 2,2V) et enfin les courbes en trait noir interrompu par des croix correspondent aux cyclages effectués à 120°C (1 cycle à C/20 entre 1 et 2,4V).

### Exemple 5 : Préparation d'une batterie Li-ion « tout solide » selon le procédé de l'invention

Dans cet exemple on a préparé une batterie de diamètre 8 mm dans laquelle le rapport de masse électrode positive/électrode négative était de 1,0 pour des compositions d'électrodes renfermant 42,5 % en masse de matériau actif d'électrode, 42,5 % en masse d'électrolyte et 15 % en masse d'agent générant une conductivité électronique.

Cette batterie était constituée :
- d'une électrode positive et d'une électrode négative constituées de 0,021 g de LVP ayant une granulométrie moyenne de 30-40 µm, de 0,021 g de LAG ayant une granulométrie moyenne de 5-10 µm et de 0,0075 g de noir de carbone vendu sous la dénomination commerciale Super P® par la société Timcal ayant une granulométrie moyenne de 50-100 nm. Le mélange de ces ingrédients a été broyé manuellement dans un mortier en agate pendant 20 minutes ;
- d'un électrolyte solide constitué de 0,06 g de LAG ayant une granulométrie moyenne de 5-10 µm.

Les différents mélanges constituant l'électrode positive, l'électrolyte et l'électrode négative ont ensuite été placés successivement dans une matrice en carbone graphite (grade 2333, société Carbone Lorraine), de 8 mm de diamètre, et dont l'intérieur a été protégé par un film de graphite flexible vendu sous la dénomination commerciale Papyex® par la société Carbone Lorraine. La matrice a ensuite été fermée par des pistons symétriques constitués également de carbone graphite de grade 2333 puis introduite dans la chambre d'une machine SPS vendue sous la dénomination commerciale Dr Sinter 2080® par la société Sumitomo Inc., qui a alors été mise sous vide secondaire. La mise en forme de la batterie a alors eu lieu en appliquant deux rampes, à savoir une rampe en pression et une rampe en température. Une pression de 100 MPa a été atteinte en trois minutes et maintenue pendant le reste de la synthèse (7 minutes). Une température de 680°C a été atteinte en 2 étapes : une rampe de 100°C.min⁻¹ pendant 6 minutes, puis une rampe de 40°C.min⁻¹ pendant 2 minutes. Cette température a alors été maintenue pendant 2 minutes. Ces rampes de température ont été obtenues par application de courants directs pulsés définis sur 14 périodes de 3,2 ms, dont 12 périodes de pulses et 2 périodes de non pulses. La matrice a alors été refroidie au sein de la chambre du SPS. La batterie ainsi obtenue a ensuite été polie sur papier abrasif pour enlever le film de Papyex® résiduel.

On a obtenu une batterie « tout solide » de diamètre 8 mm et d'épaisseur totale de 1240 µm, ladite batterie étant constituée d'une couche d'un matériau composite d'électrode positive de 415 µm d'épaisseur, d'une couche intermédiaire d'électrolyte solide de 410 µm d'épaisseur et d'une couche d'un matériau d'électrode négative de 415 µm d'épaisseur.

Dans cette batterie, le rapport de masse électrode positive/électrode négative est de 1 pour des compositions d'électrodes renfermant 42,5 % en masse de matériau actif d'électrode Li₃V₂(PO₄)₃, 42,5 % en masse d'électrolyte Li_{1,5}Al_{0,5}Ge_{1,5}(PO₄)₃ et 15 % en masse de carbone Super P ®.

Cette batterie a ensuite été soumise à des tests électrochimiques comme décrit ci-dessus à l'exemple 2.

La figure 6 annexée représente les courbes électrochimiques de la batterie ainsi obtenue à 120°C, à différents régimes. Sur cette figure, le potentiel V est fonction de la quantité de lithium inséré par mole de matière active (trait en gris clair : cycles à C/32 ; trait en noir: cycles à C/20).

### Exemple 6 : Préparation d'une batterie Li-ion « tout solide » selon le procédé de l'invention

Dans cet exemple on a préparé une batterie de diamètre 8 mm dans laquelle le rapport de masse électrode positive/électrode négative était de 1 pour des compositions d'électrodes renfermant 25 % en masse de matériau actif d'électrode, 60 % en masse d'électrolyte et 15 % en masse d'agent générant une conductivité électronique.

Cette batterie était constituée :
- d'une électrode positive constituée de 0,05 g de LiCoPO₄ (LCP) ayant une granulométrie moyenne de 1 µm, de 0,12 g de Li_{1,5}Al_{0,5}Ge_{1,5}(PO₄)₃ (LAG) ayant une granulométrie moyenne de 5-10 µm et de 0,03 g de noir de carbone vendu sous la dénomination commerciale Super P® par la société Timcal ayant une granulométrie moyenne de 50-100 nm. Le mélange de ces ingrédients a été broyé manuellement dans un mortier en agate pendant 20 minutes ;
- d'une électrode négative constituée de 0,05 g de Li₃V₂(PO₄)₃ (LVP) ayant une granulométrie moyenne de 30-40 µm, de 0,12 g de LAG ayant une granulométrie moyenne de 5-10 µm et de 0,03 g de carbone Super P® de la société Timcal ayant une granulométrie moyenne de 50-100 nm. Le mélange de ces ingrédients a été broyé manuellement dans un mortier en agate pendant 20 minutes ;
- d'un électrolyte solide constitué de 0,1 g de Li_{1,5}Al_{0,5}Ge_{1,5}(PO₄)₃ de granulométrie allant de 0,4 à 5 µm.

Les différents mélanges constituant l'électrode positive, l'électrolyte et l'électrode négative ont ensuite été placés successivement dans une matrice en carbone graphite (grade 2333, société Carbone Lorraine), de 8 mm de diamètre, et dont l'intérieur a été protégé par un film de graphite flexible vendu sous la dénomination commerciale Papyex® par la société Carbone Lorraine. La matrice a ensuite été fermée par des pistons symétriques constitués également de carbone graphite de grade 2333 puis introduite dans la chambre d'une machine SPS vendue sous la dénomination commerciale Dr Sinter 2080® par la société Sumitomo Inc., qui a alors été mise sous vide secondaire. La mise en forme de la batterie a alors eu lieu en appliquant deux rampes, à savoir une rampe en pression et une rampe en température. Une pression de 100 MPa a été atteinte en trois minutes et maintenue pendant le reste de la synthèse (7 minutes). Une température de 650°C a été atteinte en 2 étapes : une rampe de 100°C.min⁻¹ pendant 5 minutes, puis une rampe de 50°C.min⁻¹ pendant 3 minutes. Cette température a alors été maintenue pendant 2 minutes. Ces rampes de température ont été obtenues par application de courants directs pulsés définis sur 14 périodes de 3,2 ms, dont 12 périodes de pulses et 2 périodes de non pulses. La matrice a alors été refroidie au sein de la chambre du SPS. La batterie ainsi obtenue a ensuite été polie sur papier abrasif pour enlever le film de Papyex® résiduel.

On a ainsi obtenu une batterie Li-ion monolithique de diamètre 8 mm et d'épaisseur totale de 3030 µm, ladite batterie étant constituée d'une couche d'un matériau composite d'électrode positive de 940 µm d'épaisseur, d'une couche intermédiaire d'électrolyte solide de 740 µm d'épaisseur et d'une couche d'un matériau d'électrode négative de 1350 µm d'épaisseur.

Dans cette batterie, le rapport de masse électrode positive/électrode négative est de 1 pour des compositions d'électrodes renfermant 25 % en masse de matériau actif d'électrode, 60 % en masse d'électrolyte Li_{1,5}Al_{0,5}Ge_{1,5}(PO₄)₃ et 15 % en masse de carbone Super P ®.

### Exemple 7 : Préparation d'une cellule Li-ion « tout solide » selon le procédé de l'invention

Dans cet exemple on a préparé un ensemble de batteries de diamètre 8 mm dans laquelle le rapport de masse électrode positive/électrode négative était de 0,5 pour des compositions d'électrodes renfermant 25 % en masse de matériau actif d'électrode, 60% en masse d'électrolyte et 15 % en masse d'agent générant une conductivité électronique.

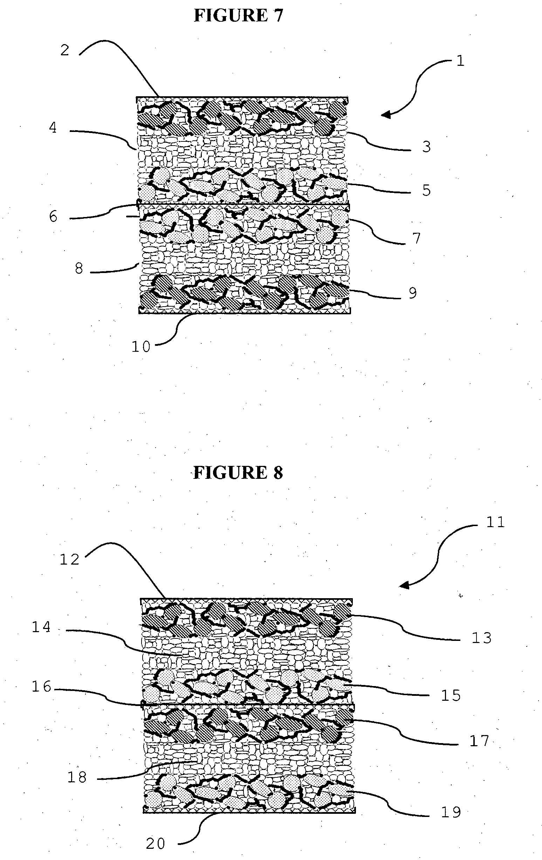

La figure 7 annexée représente une vue schématique de cette cellule 1 comprenant deux batteries montées tête-bêche.

Cette cellule 1 est constituée dans l'ordre selon la Figure 7:
- d'un collecteur de courant 2 (feuille de cuivre) de 20 µm;
- d'une première électrode négative 3 constituée de 0,0125 g de LVP ayant une granulométrie moyenne de 30-40 µm, de 0,03 g de LAG ayant une granulométrie moyenne de 5-10 µm et de 0,0075 g de carbone Super P® de la société Timcal ayant une granulométrie moyenne de 50-100 nm. Le mélange de ces ingrédients a été broyé manuellement dans un mortier en agate pendant 20 minutes ;
- d'un électrolyte solide 4 constitué de 0,03 g de LAG ayant une granulométrie moyenne de 5-10 µm ;
- d'une première électrode positive 5 constituée de 0,00625 g de LFP ayant une granulométrie moyenne de 15-20 µm, de 0,015 g de LAG ayant une granulométrie moyenne de 5-10 µm et de 0,00375 g de noir de carbone vendu sous la dénomination commerciale Super P® par la société Timcal ayant une granulométrie moyenne de 50-100 nm. Le mélange de ces ingrédients a été broyé manuellement dans un mortier en agate pendant 20 minutes ;
- d'un collecteur de courant 6 (feuille inox) de 20 µm ;
- d'une deuxième électrode positive 7 identique à la première électrode positive 5 ;
- d'un électrolyte solide 8 constitué de 0,03 g de LAG ayant une granulométrie moyenne de 5-10 µm ;
- d'une deuxième électrode négative 9 identique à la première électrode négative 3 ;
- d'un collecteur de courant 10 (feuille de cuivre) de 20 µm ;

Les différents éléments ont été placés successivement dans une matrice en carbone graphite (grade 2333, société Carbone Lorraine), de 8 mm de diamètre, et dont l'intérieur a été protégé par un film de Papyex®. La matrice a ensuite été fermée par des pistons symétriques constitués également de carbone graphite de grade 2333 puis introduite dans la chambre de la machine SPS utilisée ci-dessus à l'exemple 1, qui a alors été mise sous vide secondaire. La mise en forme de la batterie a alors été effectuée dans les conditions décrites ci-dessus à l'exemple 1.

On a obtenu une cellule bipolaire de diamètre 8 mm et d'épaisseur totale de 1520 µm, ladite cellule étant constituée de couches d'un matériau composite d'électrode positive d'environ 170 µm d'épaisseur, de couches intermédiaires d'électrolyte solide d'environ 200 µm d'épaisseur et de couches d'un matériau composite d'électrode négative d'environ 370 µm d'épaisseur.

### Exemple 8 : Préparation d'un assemblage de 2 batteries Li-ion « tout solide » selon le procédé de l'invention

Dans cet exemple on a préparé une batterie de diamètre 8 mm dans laquelle le rapport de masse électrode positive/électrode négative était de 0,5 pour des compositions d'électrodes renfermant 25 % en masse de matériau actif d'électrode, 60% en masse d'électrolyte et 15 % en masse d'agent générant une conductivité électronique.

La figure 8 annexée représente une vue schématique d'une cellule bipolaire 11 comprenant deux batteries montées en série.

Cet assemblage en série (Figure 8) était constitué :
- d'un collecteur de courant 12 (feuille de cuivre) de 20 µm ;
- d'une première électrode négative 13 constituée de 0,0125 g de LVP ayant une granulométrie moyenne de 30-40 µm, de 0,03 g de LAG ayant une granulométrie moyenne de 5-10 µm et de 0,0075 g de carbone Super P® de la société Timcal ayant une granulométrie moyenne de 50-100 nm. Le mélange de ces ingrédients a été broyé manuellement dans un mortier en agate pendant 20 minutes ;
- d'un électrolyte solide 14 constitué de 0,03 g de LAG ayant une granulométrie moyenne de 5-10 µm ;
- d'une première électrode positive 15 constituée de 0,00625 g de LFP ayant une granulométrie moyenne de 15-20 µm, de 0,015 g de LAG ayant une granulométrie moyenne de 5-10 µm et de 0,00375 g de noir de carbone vendu sous la dénomination commerciale Super P® par la société Timcal ayant une granulométrie moyenne de 50-100 nm. Le mélange de ces ingrédients a été broyé manuellement dans un mortier en agate pendant 20 minutes ;
- d'un collecteur de courant 16 (feuille inox) de 20 µm ;
- d'une seconde électrode négative 17 identique à la première électrode négative 13 ;
- d'un électrolyte solide 19 constitué de 0,03 g de LAG ayant une granulométrie moyenne de 5-10 µm ;
- d'une seconde électrode positive 19 identique à la première électrode positive 15 ;
- d'un collecteur de courant 20 (feuille d'inox) de 20 µm ;

Les différents éléments ont été placés successivement dans une matrice en carbone graphite (grade 2333, société Carbone Lorraine), de 8 mm de diamètre, et dont l'intérieur a été protégé par un film de Papyex®. La matrice a ensuite été fermée par des pistons symétriques constitués également de carbone graphite de grade 2333 puis introduite dans la chambre de la machine SPS utilisée ci-dessus à l'exemple 1, qui a alors été mise sous vide secondaire. La mise en forme de la batterie a alors été effectuée dans les conditions décrites ci-dessus à l'exemple 1.

On a obtenu un assemblage de deux batteries en série de diamètre 8 mm et d'épaisseur totale de 1550 µm, ladite cellule étant constituée de couches d'un matériau composite d'électrode positive d'environ 170 µm d'épaisseur, de couches intermédiaires d'électrolyte solide d'environ 200 µm d'épaisseur et de couches d'un matériau composite d'électrode négative d'environ 370 µm d'épaisseur.

## Revendications

1. Procédé de préparation d'une batterie tout solide Li-ion à corps monolithique comprenant au moins une couche d'un matériau composite d'électrode négative, au moins une couche d'un matériau composite d'électrode positive, lesdites couches étant séparées l'une de l'autre par au moins une couche intermédiaire d'un électrolyte solide, ledit procédé comprenant les étapes suivantes :
- la préparation d'un mélange pulvérulent (MP1) comprenant au moins une poudre de matériau actif d'électrode négative, au moins une poudre d'un électrolyte solide, et au moins un agent générant une conductivité électronique ;
- la préparation d'un mélange pulvérulent (MP2) comprenant au moins une poudre de matériau actif d'électrode positive à base de lithium, au moins une poudre d'un électrolyte solide, et au moins un agent générant une conductivité électronique ;
et étant **caractérisé en ce que** :
- l'assemblage de la batterie est réalisé en une seule étape par superposition d'au moins une couche de mélange MP1 et d'au moins une couche de mélange MP2, lesdites couches étant séparées l'une de l'autre par au moins une couche intermédiaire d'un électrolyte solide sous forme pulvérulente, et frittage simultané des trois couches à une pression d'au moins 20 MPa, sous courant pulsé,
- l'électrolyte solide sous forme pulvérulente présente une granulométrie inférieure ou égale à 5 µm,
- la teneur en électrolyte solide dans chacun des mélanges MP1 et MP2 varie indépendamment de 10 à 80 % en masse,
- la teneur en agent générant une conductivité électronique dans chacun des mélanges MP1 et MP2 varie indépendamment de 2 à 25 % en masse, et
- la teneur en matériau actif d'électrode dans chacun des mélanges MP1 et MP2 varie indépendamment de 20 à 85 % en masse.

2. Procédé selon la revendication 1, dans lequel la teneur en électrolyte solide dans chacun des mélanges MP1 et MP2 varie indépendamment de 30 à 80 % en masse.

3. Procédé selon l'une des revendications précédentes, **caractérisé en ce que** la granulométrie des poudres d'électrolytes solides utilisables dans les mélanges MP1 et MP2 et dans la couche intermédiaire d'électrolyte est inférieure à la granulométrie des autres composants pulvérulents présents dans les mélanges MP1 et MP2.

4. Procédé selon l'une des revendications précédentes, **caractérisé en ce que** la granulométrie des poudres d'électrolyte solide est inférieure ou égale à 1 µm.

5. Procédé selon l'une quelconque des revendications précédentes, **caractérisé en ce que** la granulométrie moyenne des mélanges MP1 et MP2 varie indépendamment de 1 à 10 µm.

6. Précédé selon l'une quelconque des revendications précédentes, **caractérisé en ce que** la granulométrie du mélange MP1 est sensiblement identique à la granulométrie du mélange MP2.

7. Procédé selon l'une quelconque des revendications précédentes, **caractérisé en ce que** le matériau actif d'électrode négative est choisi parmi les phosphates de lithium, les oxydes de titane et de lithium, les phosphates de niobium, le silicium et le graphite de carbone, éventuellement enrobé d'une couche protectrice telle que. AlPO₄, Li₂SiO₃, ZrO₂, FePO₄.

8. Procédé selon la revendication 7, **caractérisé en ce que** le matériau actif d'électrode négative est un phosphate de lithium choisi parmi Li₃V₂(PO₄)₃, LiTi₂(PO₄)₃, ou une de leurs mélanges.

9. Procédé selon l'une quelconque des revendications précédentes, **caractérisé en ce que** les électrolytes solides sont choisis parmi les phosphates de lithium de formule générale Li₁₊ₓAlₓM₂₋ₓ(PO₄)₃ avec M = Ge, Ti, Zr, Hf et 0 < x < 1.

10. Procédé selon la revendication 9, **caractérisé en ce que** les phosphates de lithium sont choisis parmi Li_{1,5}Al_{0,5}Ge_{1,5}(PO₄)₃ et Li_{1,3}Al_{0,3}Ti_{1,7}(PO₄)₃.

11. Procédé selon l'une quelconque des revendications précédentes, **caractérisé en ce que** les trois couches renferment le même électrolyte.

12. Procédé selon l'une quelconque des revendications 1 à 10, **caractérisé en ce que** l'électrolyte solide présent dans le mélange MP1 est différent de l'électrolyte solide présent dans le mélange MP2, et **en ce que** la couche de mélange MP1 renferme au moins un électrolyte solide E1, la couche de mélange MP2 renferme au moins un électrolyte solide E2 différent de E1 et la couche d'électrolyte séparant les couches des mélanges MP1 et MP2 est constituée d'au moins une couche d'électrolyte E1 en contact avec la couche de mélange MP1 et d'au moins une couche d'électrolyte E2 en contact avec la couche de mélange MP2.

13. Procédé selon l'une quelconque des revendications précédentes, **caractérisé en ce que** le matériau actif d'électrode positive est choisi parmi les phosphates de lithium et les oxydes de lithium, éventuellement enrobé d'une couche protectrice, telle que AlPO₄, Li₂SiO₃, ZrO₂, FePO₄.

14. Procédé selon la revendication 13, **caractérisé en ce que** les phosphates de lithium utilisables à titre de matériau actif d'électrode positive sont choisis parmi LiFePO₄, Li₃V₂(PO₄)₃, LiCoPO₄, LiMnPO₄, LiNiPO₄ et leurs mélanges.

15. Procédé selon l'une quelconque des revendications précédentes, **caractérisé en ce que** le matériau actif d'électrode négative, le ou les électrolyte(s) solide(s) et le matériau actif d'électrode positive sont choisis parmi les phosphates de lithium.

16. Procédé selon l'une quelconque des revendications précédentes, **caractérisé en ce que** l'agent générant une conductivité électronique est choisi parmi les matériaux carbonés, les métaux et les nitrures.

17. Procédé selon l'une quelconque des revendications précédentes, **caractérisé en ce que** l'agent générant une conductivité électronique est un matériau carboné sous forme de particules de granulométrie nanométrique.

18. Procédé selon l'une quelconque des revendications précédentes, **caractérisé en ce que** le frittage est réalisé sous vide primaire ou secondaire, sous atmosphère d'argon ou d'azote.

19. Procédé selon l'une quelconque des revendications précédentes, **caractérisé en ce que** le frittage est réalisé à une pression de 100 MPa.

20. Procédé selon l'une quelconque des revendications précédentes, **caractérisé en ce que** la température maximale de frittage varie de 500 à 1000°C.

21. Procédé selon l'une quelconque des revendications précédentes, **caractérisé en ce que** le frittage est réalisé sous vide secondaire, à une pression de 100 MPa à une température maximale comprise entre 600 et 700°C, maintenue pendant une durée de 2 à 4 minutes.

22. Procédé selon l'une quelconque des revendications précédentes, **caractérisé en ce que** l'intensité du courant pulsé varie de 10 à 8000 A et **en ce que** la durée de chaque impulsion varie de 1 à 5 ms.

23. Procédé selon l'une quelconque des revendications précédentes, **caractérisé en ce que** lors de l'étape d'assemblage de la batterie, au moins un collecteur de courant est positionné sur la face externe de la couche de mélange MP1 et/ou sur la face externe de la couche de mélange MP2, de sorte à être fritté simultanément avec la couche de mélange MP1, la couche d'électrolyte et la couche de mélange MP2.

24. Procédé selon la revendication 23, dans lequel ledit collecteur de courant est choisi parmi : le cuivre, le nickel, l'inox, l'aluminium, le carbone, le titane, l'argent, l'or, le platine ou un de leurs mélanges.

25. Procédé selon l'une des revendications 23 ou 24, dans lequel un premier collecteur de courant est positionné sur la couche de mélange MP1 et un deuxième collecteur de courant est positionné sur la couche de mélange MP2, de sorte à réaliser un frittage simultané d'au moins cinq couches : premier collecteur/couche MP1/couche électrolyte solide/couche MP2/deuxième collecteur.

26. Batterie « tout solide » Li-ion obtenue en mettant en oeuvre le procédé de préparation défini à l'une quelconque des revendications précédentes, ladite batterie comprenant un corps monolithique formé d'au moins trois couches superposées comme suit :
- au moins une couche d'un matériau composite d'électrode négative comprenant au moins un matériau actif d'électrode négative, au moins un électrolyte solide, et au moins un agent générant une conductivité électronique ;
- au moins une couche d'un matériau composite d'électrode positive comprenant au moins un matériau actif d'électrode positive à base de lithium, au moins un électrolyte solide, et au moins un agent générant une conductivité électronique ;
- au moins une couche intermédiaire d'électrolyte solide séparant lesdites couches de matériaux composites d'électrodes négative et positive l'une de l'autre ;
- la teneur en électrolyte solide dans chacune des couches de matériau composite d'électrode varie indépendamment de 10 à 80 % en masse ;
- la teneur en agent générant une conductivité électronique dans chacune des couches de matériau composite d'électrode varie indépendamment de 2 à 25 % en masse ; et
- la teneur en matériau actif d'électrode dans chacune des couches de matériau composite d'électrode varie indépendamment de 20 à 85 % en masse,
ladite batterie étant **caractérisée en ce que** l'épaisseur de chacune des couches d'électrode varie, indépendamment l'une de l'autre, de 30 à 1400 µm.

27. Batterie selon la revendication 26, dans laquelle l'épaisseur de chacune des couches d'électrode varie, indépendamment l'une de l'autre, de 50 µm à 800 µm.

28. Batterie selon la revendication 26 ou 27, **caractérisée en ce que** l'épaisseur de la couche intermédiaire d'électrolyte varie de 10 à 500 µm.

29. Batterie selon l'une des revendications 26 à 28, dans laquelle la teneur en électrolyte solide dans chacune des couches de matériau composite d'électrode varie indépendamment de 30 % à 80 % en masse.

30. Batterie selon l'une des revendications 26 à 29, **caractérisé en ce que** ledit corps monolithique comprend également au moins un collecteur de courant superposé à la couche du matériau composite d'électrode négative et/ou à la couche du matériau composite d'électrode positive, au niveau de leur face externe.

31. Batterie selon la revendication 30, dans laquelle ladite couche de collecteur de courant est choisie parmi : le cuivre, le nickel, l'inox, l'aluminium, le carbone, le titane, l'argent, l'or, le platine ou un de leurs mélanges.

32. Ensemble de batteries, **caractérisé en ce qu'**il comprend au moins deux batteries selon l'une des revendications 30 ou 31, reliées par un collecteur de courant qui appartient à l'une ou l'autre desdites batteries, ledit collecteur de courant formant une barrière physique au passage des ions.

## Patentansprüche

1. Verfahren zur Herstellung einer monolithischen Li-Ionen-Festkörperbatterie, die mindestens eine Schicht eines Verbundmaterials negativer Elektrode, mindestens eine Schicht eines Verbundmaterials positiver Elektrode umfasst, wobei die Schichten voneinander durch mindestens eine Zwischenschicht eines festen Elektrolyts getrennt sind, wobei das Verfahren die folgenden Schritte umfasst:
- Herstellen eines pulverförmigen Gemischs (MP1), das mindestens ein Pulver eines aktiven Materials negativer Elektrode, mindestens ein Pulver eines festen Elektrolyts und mindestens ein Mittel umfasst, das eine elektronische Leitfähigkeit generiert,
- Herstellen eines pulverförmigen Gemischs (MP2), das mindestens ein Pulver eines aktiven Materials positiver Elektrode auf Lithiumbasis, mindestens ein Pulver eines festen Elektrolyts und mindestens ein Mittel umfasst, das eine elektronische Leitfähigkeit generiert,
und **dadurch gekennzeichnet ist, dass**:
- die Montage der Batterie in einem Schritt durch Übereinanderlagern von mindestens einer MP1-Gemischschicht und von mindestens einer MP2-Gemischschicht, wobei die Schichten voneinander von mindestens einer Zwischenschicht eines festen Elektrolyts in pulverförmiger Form getrennt sind, und gleichzeitiges Sintern der drei Schichten bei einem Druck von mindestens 20 MPa unter pulsierendem Strom durchgeführt wird,
- der feste Elektrolyt in pulverförmiger Form eine Korngröße unter oder von gleich 5 µm aufweist,
- der Gehalt an festem Elektrolyt in jedem der Gemische MP1 und MP2 unabhängig von 10 bis 80 Ma% schwankt,
- der Gehalt an Mittel, das eine elektronische Leitfähigkeit in jedem der Gemische MP1 und MP2 erzeugt, unabhängig von 2 bis 25 Ma% schwankt, und
- der Gehalt an aktivem Elektrodenmaterial in jedem der Gemische MP1 und MP2 unabhängig von 20 bis 85 Ma% schwankt.

2. Verfahren nach Anspruch 1, wobei der Gehalt an festem Elektrolyt in jedem der Gemische MP1 und MP2 unabhängig von 30 bis 80 Ma% schwankt.

3. Verfahren nach einem der vorangehenden Ansprüche, **dadurch gekennzeichnet, dass** die Korngröße der Pulver fester Elektrolyte, die in den Gemischen MP1 und MP2 und in der Elektrolyt-Zwischenschicht verwendbar sind, kleiner als die Korngröße der anderen pulverförmigen Bestandteile ist, die in den Gemischen MP1 und MP2 vorhanden sind.

4. Verfahren nach einem der vorangehenden Ansprüche, **dadurch gekennzeichnet, dass** die Korngröße des Pulvers festen Elektrolyts kleiner oder gleich 1 µm ist.

5. Verfahren nach einem der vorangehenden Ansprüche, **dadurch gekennzeichnet, dass** die durchschnittliche Korngröße der Gemische MP1 und MP2 unabhängig von 1 bis 10 µm schwankt.

6. Verfahren nach einem der vorangehenden Ansprüche, **dadurch gekennzeichnet, dass** die Korngröße des Gemischs MP1 etwa der Korngröße des Gemischs MP2 entspricht.

7. Verfahren nach einem der vorangehenden Ansprüche, **dadurch gekennzeichnet, dass** das aktive Material negativer Elektrode aus den Lithiumphosphaten, den Titan- und Lithiumoxiden, den Niobiumphosphaten, dem Silizium und dem Karbongraphit, eventuell umhüllt mit einer Schutzschicht wie AlPO₄, Li₂SiO₃, ZrO₂, FePO₄, ausgewählt ist.

8. Verfahren nach Anspruch 7, **dadurch gekennzeichnet, dass** das aktive Material negativer Elektrode ein Lithiumphosphat ist, ausgewählt aus Li₃V₂(PO₄)₃, LiTi₂(PO₄)₃ oder einem ihrer Gemische.

9. Verfahren nach einem der vorangehenden Ansprüche, **dadurch gekennzeichnet, dass** die festen Elektrolyte aus den Lithiumphosphaten der allgemeinen Formel Li₁₊ₓAlₓM₂₋ₓ(PO₄) mit M = Ge, Ti, Zr, Hf und 0 < x < 1 ausgewählt sind.

10. Verfahren nach Anspruch 9, **dadurch gekennzeichnet, dass** die Lithiumphosphate aus Li_{1,5}Al_{0,5}Ge_{1,5}(PO₄) und Li_{1,3}Al_{0.3}Ti_{1,7}(PO₄)₃ ausgewählt sind.

11. Verfahren nach einem der vorangehenden Ansprüche, **dadurch gekennzeichnet, dass** die drei Schichten denselben Elektrolyt umschließen.

12. Verfahren nach einem der Ansprüche 1 bis 10, **dadurch gekennzeichnet, dass** sich der im Gemisch MP1 vorhandene feste Elektrolyt von dem im Gemisch MP2 vorhandenen festen Elektrolyt unterscheidet und dass die MP1-Gemischschicht mindestens einen festen Elektrolyt E1 umschließt, wobei die MP2-Gemischschicht mindestens einen festen Elektrolyt E2 umschließt, der sich von E1 unterscheidet, und die Elektrolytschicht, die die Schichten der Gemische MP1 und MP2 trennt, von mindestens einer Elektrolytschicht E1 im Kontakt mit der MP1-Gemischschicht und mindestens einer Elektrolytschicht E2 im Kontakt mit der MP2-Gemischschicht gebildet ist.

13. Verfahren nach einem der vorangehenden Ansprüche, **dadurch gekennzeichnet, dass** das aktive Material positiver Elektrode aus den Lithiumphosphaten und den Lithiumoxiden, eventuell umhüllt mit einer Schutzschicht wie AlPO₄, Li₂SiO₃, ZrO₂, FePO₄, ausgewählt ist.

14. Verfahren nach Anspruch 13, **dadurch gekennzeichnet, dass** die als aktives Material positiver Elektrode verwendbaren Lithiumphosphate aus LiFePO₄, Li₃V₂(PO₄)₃, LiCoPO₄, LiMnPO₄, LiNiPO₄ und ihren Gemischen ausgewählt sind.

15. Verfahren nach einem der vorangehenden Ansprüche, **dadurch gekennzeichnet, dass** das aktive Material negativer Elektrode, der oder die feste(n) Elektrolyt(e) und das aktive Material positiver Elektrode aus den Lithiumphosphaten ausgewählt sind.

16. Verfahren nach einem der vorangehenden Ansprüche, **dadurch gekennzeichnet, dass** das eine elektronische Leitfähigkeit generierende Mittel aus den Karbonmaterialien, den Metallen und den Nitriden ausgewählt ist.

17. Verfahren nach einem der vorangehenden Ansprüche, **dadurch gekennzeichnet, dass** das eine elektronische Leitfähigkeit generierende Mittel ein Karbonmaterial in Form von Partikeln nanometrischer Korngröße ist.

18. Verfahren nach einem der vorangehenden Ansprüche, **dadurch gekennzeichnet, dass** das Sintern unter Primär- oder Sekundärvakuum, unter Argon- oder Stickstoffatmosphäre durchgeführt wird.

19. Verfahren nach einem der vorangehenden Ansprüche, **dadurch gekennzeichnet, dass** das Sintern bei einem Druck von 100 MPa durchgeführt wird.

20. Verfahren nach einem der vorangehenden Ansprüche, **dadurch gekennzeichnet, dass** die maximale Sintertemperatur von 500 bis 1000 °C schwankt.

21. Verfahren nach einem der vorangehenden Ansprüche, **dadurch gekennzeichnet, dass** das Sintern unter Sekundärvakuum bei einem Druck von 100 MPa, bei einer maximalen Temperatur zwischen 600 und 700 °C inklusive, die während einer Dauer von 2 bis 4 Minuten gehalten wird, durchgeführt wird.

22. Verfahren nach einem der vorangehenden Ansprüche, **dadurch gekennzeichnet, dass** die Stärke des gepulsten Stroms von 10 bis 8000 A schwankt und dass die Dauer jedes Impulses von 1 bis 5 ms schwankt.

23. Verfahren nach einem der vorangehenden Ansprüche, **dadurch gekennzeichnet, dass** beim Montageschritt der Batterie mindestens ein Stromsammler auf der Außenseite der MP1-Gemischschicht und/oder auf der Außenseite der MP2-Gemischschicht positioniert ist, so dass das Sintern gleichzeitig mit der MP1-Gemischschicht, der Elektrolytschicht und der MP2-Gemischschicht erfolgt.

24. Verfahren nach Anspruch 23, wobei der Stromsammler ausgewählt ist aus: dem Kupfer, dem Nickel, dem Edelstahl, dem Aluminium, dem Karbon, dem Titan, dem Silber, dem Gold, dem Platin oder einem ihrer Gemische.

25. Verfahren nach einem der Ansprüche 23 oder 24, wobei ein erster Stromsammler auf der MP1-Gemischschicht positioniert ist und ein zweiter Stromsammler auf der MP2-Gemischschicht positioniert ist, so dass ein gleichzeitiges Sintern von mindestens fünf Schichten durchgeführt wird: erster Sammler / Schicht MP1 / Schicht festen Elektrolyts / Schicht MP2 / zweiter Sammler.

26. Li-Ionen-Festkörperbatterie, hergestellt durch Umsetzung des Herstellungsverfahrens nach einem der vorangehenden Ansprüche, wobei die Batterie einen monolithischen Körper umfasst, der von mindestens drei wie folgt übereinandergelagerten Schichten gebildet ist:
- mindestens einer Schicht eines Verbundmaterials negativer Elektrode, umfassend mindestens ein aktives Material negativer Elektrode, mindestens einen festen Elektrolyt und mindestens ein Mittel, das eine elektronische Leitfähigkeit generiert,
- mindestens einer Schicht eines Verbundmaterials positiver Elektrode, umfassend mindestens ein aktives Material positiver Elektrode auf Lithiumbasis, mindestens einen festen Elektrolyt und mindestens Mittel, das eine elektronische Leitfähigkeit generiert,
- mindestens eine Zwischenschicht festen Elektrolyts, die die Verbundmaterialschichten negativer und positiver Elektrode voneinander trennt,
- wobei der Gehalt an festem Elektrolyt in jeder der Elektrodenverbundmaterialschichten unabhängig von 10 bis 80 Ma% schwankt,
- wobei der Gehalt an Mittel, das eine elektronische Leitfähigkeit generiert, in jeder der Elektrodenverbundmaterialschichten unabhängig von 2 bis 25 Ma% schwankt, und
- wobei der Gehalt an aktivem Elektrodenmaterial in jeder der Elektrodenverbundmaterialschichten unabhängig von 20 bis 85 Ma% schwankt,
wobei die Batterie **dadurch gekennzeichnet ist, dass** die Dicke jeder der Elektrodenschichten unabhängig voneinander von 30 bis 1400 µm schwankt.

27. Batterie nach Anspruch 26, wobei die Dicke jeder der Elektrodenschichten unabhängig voneinander von 50 µm bis 800 µm schwankt.

28. Batterie nach Anspruch 26 oder 27, **dadurch gekennzeichnet, dass** die Dicke der Zwischenelektrolytschicht von 10 bis 500 µm schwankt.

29. Batterie nach einem der Ansprüche 26 bis 28, wobei der Gehalt an festem Elektrolyt in jeder der Elektrodenverbundmaterialschichten unabhängig von 30 % bis 80 Ma% schwankt.

30. Batterie nach einem der Ansprüche 26 bis 29, **dadurch gekennzeichnet, dass** der monolithische Körper ebenfalls mindestens einen Stromsammler umfasst, der über die Verbundmaterialschicht negativer Elektrode und/oder die Verbundmaterialschicht positiver Elektrode im Bereich ihrer Außenseite gelagert ist.

31. Batterie nach Anspruch 30, wobei die Stromsammlerschicht ausgewählt ist aus: dem Kupfer, dem Nickel, dem Edelstahl, dem Aluminium, dem Karbon, dem Titan, dem Silber, dem Gold, dem Platin oder einem ihrer Gemische.

32. Batterieeinheit, **dadurch gekennzeichnet, dass** sie mindestens zwei Batterien nach einem der Ansprüche 30 oder 31 umfasst, die durch einen Stromsammler verbunden sind, der zu der einen oder der anderen der Batterien gehört, wobei der Stromsammler eine physische Barriere für den Durchgang der Ionen bildet.

## Claims

1. A process for producing an all-solid-state Li-ion battery with a monolithic body comprising at least one negative-electrode composite layer and at least one positive-electrode composite layer, said layers being separated from one another by at least one intermediate solid-electrolyte layer, said process comprising the following steps:
- preparing a pulverulent mixture (MP1) comprising at least one powder of an active negative-electrode material, at least one powder of a solid electrolyte, and at least one electron-conductivity providing agent;
- preparing a pulverulent mixture (MP2) comprising at least one powder of an active lithium-based positive-electrode material, at least one powder of a solid electrolyte, and at least one electron-conductivity providing agent,
and being **characterized in that**:
- the battery is formed in a single step by superposing at least one layer of mixture MP1 and at least one layer of mixture MP2, said layers being separated from one another by at least one intermediate layer of a solid electrolyte in the form of a pulverulent, and simultaneously sintering these sets of three layers, at a pressure of at least 20 MPa, using a pulsed current;
- the particle size of the solid electrolyte in pulverulent form is 5 µm or less;
- the solid-electrolyte content in each of the mixtures MP1 and MP2 independently varies from 10 to 80 wt%;
- the content of the electron-conductivity providing agent in each of the mixtures MP1 and MP2 independently varies from 2 to 25 wt%; and
- the active electrode material content in each of the mixtures MP1 and MP2 independently varies from 20 to 85 wt%.

2. The process as claimed in claim 1, wherein the solid-electrolyte content in each of the mixtures MP1 and MP2 independently varies from 30 to 80 wt%.

3. The process as claimed in either one of the preceding claims, **characterized in that** the particle size of the solid-electrolyte powders that can be used in the mixtures MP1 and MP2 and in the intermediate electrolyte layer is smaller than the particle size of the other pulverulent components present in the mixtures MP1 and MP2.

4. The process as claimed in one of the preceding claims, **characterized in that** the particle size of the solid-electrolyte powders is 1 µm or less.

5. The process as claimed in any one of the preceding claims, **characterized in that** the average particle size of the mixtures MP1 and MP2 independently varies from 1 to 10 µm.

6. The process as claimed in any one of the preceding claims, **characterized in that** the particle size of the mixture MP1 is substantially identical to the particle size of the mixture MP2.

7. The process as claimed in any one of the preceding claims, **characterized in that** the active negative-electrode material is chosen from lithium phosphates, titanium/lithium oxides, niobium phosphates, silicon and graphite, optionally coated with a protective layer such as AlPO₄, Li₂SiO₃, ZrO₂, FePO₄.

8. The process as claimed in claim 7, **characterized in that** the active negative-electrode material is a lithium phosphate chosen from Li₃V₂(PO₄)₃, LiTi₂(PO₄)₃, or one of their mixtures.

9. The process as claimed in any one of the preceding claims, **characterized in that** the solid electrolytes are chosen from lithium phosphates having the general formula Li₁₊ₓAlₓM₂₋ₓ(PO₄)₃ where M = Ge, Ti, Zr, Hf and 0 < x < 1.

10. The process as claimed in claim 9, **characterized in that** the lithium phosphates are chosen from Li_{1.5}Al_{0.5}Ge_{1.5}(PO₄)₃ and Li_{1.3}Al_{0.3}Ti_{1.7}(PO₄)₃.

11. The process as claimed in any one of the preceding claims, **characterized in that** the three layers contain the same electrolyte.

12. The process as claimed in any one of claims 1 to 10, **characterized in that** the solid electrolyte present in the mixture MP1 is different to the solid electrolyte present in the mixture MP2, and **in that** the layer of mixture MP1 contains at least one solid electrolyte E1, the layer of mixture MP2 contains at least one solid electrolyte E2 that is different from E1, and the electrolyte layer separating the layers of the mixtures MP1 and MP2 consists of at least one layer of electrolyte E1 making contact with the layer of mixture MP 1, and at least one layer of electrolyte E2 making contact with the layer of mixture MP2.

13. The process as claimed in any one of the preceding claims, **characterized in that** the active positive-electrode material is chosen from lithium phosphates and lithium oxides, optionally coated with a protective layer, such as AlPO₄, Li₂SiO₃, ZrO₂, FePO₄.

14. The process as claimed in claim 13, **characterized in that** the lithium phosphates that can be used by way of active positive-electrode material are chosen from LiFePO₄, Li₃V₂(PO₄)₃, LiCoPO₄, LiMnPO₄, LiNiPO₄ and their mixtures.

15. The process as claimed in any one of the preceding claims, **characterized in that** the active negative-electrode material, the one or more solid electrolytes, and the active positive-electrode material are chosen from lithium phosphates.

16. The process as claimed in any one of the preceding claims, **characterized in that** the electron-conductivity providing agent is chosen from carbon-based materials, metals and nitrides.

17. The process as claimed in any one of the preceding claims, **characterized in that** the electron-conductivity providing agent is a carbon-based material in the form of particles with nanoscale particle size.

18. The process as claimed in any one of the preceding claims, **characterized in that** the sintering is carried out under a primary or secondary vacuum in an argon or nitrogen atmosphere.

19. The process as claimed in any one of the preceding claims, **characterized in that** the sintering is carried out at a pressure of 100 MPa.

20. The process as claimed in any one of the preceding claims, **characterized in that** the maximum sintering temperature varies from 500 to 1000°C.

21. The process as claimed in any one of the preceding claims, **characterized in that** the sintering is carried out under a secondary vacuum at a pressure of 100 MPa, at a maximum temperature lying between 600 and 700°C, maintained for a time of 2 to 4 minutes.

22. The process as claimed in any one of the preceding claims, **characterized in that** the amplitude of the pulsed current varies from 10 to 8000 A and **in that** the length of each pulse varies from 1 to 5 ms.

23. The process as claimed in any one of the preceding claims, **characterized in that**, during the step of forming the battery, at least one current collector is positioned on the external face of the layer of mixture MP1 and/or on the external face of the layer of mixture MP2, so as to be simultaneously sintered with the layer of mixture MP1, the electrolyte layer and layer of mixture MP2.

24. The process as claimed in claim 23, wherein said current collector is chosen from: copper, nickel, stainless steel, aluminum, carbon, titanium, silver, gold, platinum, or one of their alloys.

25. The process as claimed in either one of claims 23 and 24, wherein a first current collector is positioned on the layer of mixture MP1 and a second current collector is positioned on the layer of mixture MP2, so as to simultaneously sinter at least five layers: first collector/MP1 layer/solid-electrolyte layer/MP2 layer/second collector.

26. An "all-solid-state" Li-ion battery obtained by implementing the production process defined in any one of the preceding claims, said battery comprising a monolithic body formed by at least three superposed layers, as follows:
- at least one layer of a negative-electrode composite comprising at least one active negative-electrode material, at least one solid electrolyte, and at least one electron-conductivity providing agent;
- at least one layer of a positive-electrode composite comprising at least one active lithium-based positive-electrode material, at least one solid electrolyte, and at least one electron-conductivity providing agent;
- at least one intermediate solid-electrolyte layer separating said composite negative- and positive-electrode layers from one another;
- the solid-electrolyte content in each of the composite electrode layers independently varies from 10 to 80 wt%;
- the content of the electron-conductivity providing agent in each of the composite electrode layers independently varies from 2 to 25 wt%; and
- the active electrode material content in each of the composite electrode layers independently varies from 20 to 85 wt%,
said battery being **characterized in that** the thickness of each of the electrode layers varies, independently from one another, from 30 to 1400 µm.

27. The battery as claimed in claim 26, wherein the thickness of each of the electrode layers varies, independently from one another, from 50 µm to 800 µm.

28. The battery as claimed in either of claims 26 and 27, **characterized in that** the thickness of the intermediate electrolyte layer varies from 10 to 500 µm.

29. The battery as claimed in one of claims 26 to 28, wherein the solid-electrolyte content in each of the composite electrode layers independently varies from 30 wt% to 80 wt%.

30. The battery as claimed in any one of claims 26 to 29, **characterized in that** said monolithic body also comprises at least one current collector superposed on the composite negative-electrode layer and/or on the composite positive-electrode layer, on their external face.

31. The battery as claimed in claim 30, wherein said current-collector layer is chosen from: copper, nickel, stainless steel, aluminum, carbon, titanium, silver, gold, platinum or one of their alloys.

32. A battery stack, **characterized in that** it comprises at least two batteries as claimed in either of claims 30 and 31, connected by a current collector belonging to one or other of said batteries, said current collector forming a physical barrier to the passage of ions.
